# EUROPÄISCHE PATENTSCHRIFT

(11) **EP 1 803 777 B1**
(45) Veröffentlichungstag und Bekanntmachung des Hinweises auf die Patenterteilung: **02.03.2011**
(21) Anmeldenummer: 06125617.8
(22) Anmeldetag: 07.12.2006
(51) Int. Cl.: C08L 83/04, C09J 183/04

(54) **Vernetzbare Massen auf der Basis von Organosiliciumverbindungen**
Crosslinkable compositions based on organosilicon compounds
Composition reticulable a base d'organosilicium

(30) Priorität: 19.12.2005 DE 102005060649
(43) Veröffentlichungstag der Anmeldung: 04.07.2007
(73) Patentinhaber: Wacker Chemie AG, 81737 München (DE)
(72) Erfinder: Schöley, Peter, 01665, Diera-Zehren (DE); Söllradl, Herbert, 84547, Emmerting (DE); Prasse, Marko, 01612, Glaubitz (DE)
(74) Vertreter: Budczinski, Angelika

(56) Entgegenhaltungen:
- EP-A- 0 731 142
- EP-A- 0 857 760
- US-A- 5 561 184

## Beschreibung

Die Erfindung betrifft vernetzbare Massen auf der Basis von Organosiliciumverbindungen mit sehr guter Handhabbarkeit bei der Anwendung, Verfahren zu deren Herstellung sowie deren Verwendung.

Unter Ausschluss von Wasser lagerfähige, bei Zutritt von Wasser bei Raumtemperatur zu Elastomeren vulkanisierende Einkomponenten-Dichtmassen sind bekannt. Diese Produkte werden in großen Mengen zum Beispiel in der Bauindustrie, eingesetzt. Die Basis dieser Mischungen sind Polymere, die durch Silylgruppen terminiert sind, die reaktive Substituenten wie OH-Gruppen oder hydrolysierbare Gruppen, wie zum Beispiel Alkoxygruppen oder Acetoxygruppen, tragen. Des Weiteren können diese Dichtmassen Füllstoffe, Weichmacher, Vernetzer, Katalysatoren sowie Additive enthalten. Additive können bei Dichtmassen nicht nur ausgewählte anwendungstechnische Eigenschaften des ausgehärteten Produktes optimieren sondern auch die spezifischen Eigenschaften der Dichtmasse während der Aushärtung und sogar bereits während der Applikation verbessern.

Üblicherweise werden die Dichtmassen aus Tuben, Kartuschen oder Schlauchbeuteln ausgepresst und dann mit dem Finger oder mit einem Hilfsmittel in einer Fuge glatt gestrichen. In dieser Fuge verbleiben sie ohne wesentlich die Form zu verändern bis zur vollständigen Aushärtung. Rheologieadditive, die sich auf die Standfestigkeit von noch nicht ausgehärteten Dichtmassen auswirken, werden beispielsweise in US-A 4,304,897 beschrieben. Die aufgeführten Polyether-Silicon-Copolymere reduzieren dabei die Fließeigenschaften von Silicondichtmassen, so dass sie unter Einwirkung der Schwerkraft, also unter Einwirkung sehr geringer Scherkräfte, nicht oder nur minimal fließen.

Während der Applikation werden an die pastöse Dichtmasse meist wesentlich höhere Anforderungen gestellt. So soll die Dichtmasse beim Glattstreichen dem Finger oder dem Glättungswerkzeug einen möglichst großen Widerstand entgegensetzen um die Verfugung optimal gestalten zu können. Dieser Widerstand kann messtechnisch erfasst werden, indem die Kraft gemessen wird, die zum Eindringen eines vorgegebenen Formkörpers bis zu einer bestimmten Tiefe nötig ist. Der Widerstand beim Glätten wird in der Fachsprache auch als "body" bezeichnet. Oftmals wird von Verarbeitern der Dichtmassen ein zu niedriger "body" beklagt. Nach Beenden des Glättens soll sich die Dichtmasse im Allgemeinen mit kurzem Fadenzug vom Glättwerkzeug trennen und so einen sauberen Abschluss der Fuge ermöglichen.

In EP-A 857 760 wird eine Vielzahl nichtionischer Verbindungen zur Verringerung des Fadenzuges von Silicondichtmassen, u.a. Polyethylen-Polypropylen-Block-Copolymere, beschrieben. Der so genannte "body", das heißt, der oben beschriebene Widerstand der Dichtmasse beim Verfugen, wird dadurch jedoch nicht oder nicht wesentlich verbessert. Zur Erzielung ausreichender Widerstände gegen Verformungen der Dichtmasse müssten die bekannten nichtionische Verbindungen auch in Mengen enthalten sein, die die Haftung der Dichtmasse auf Untergründen stark verschlechtert. Ein Zusatz in solchen Mengen ist deshalb in der Praxis nicht möglich.

EP 731 142 beschreibt härtbare Siloxanzusammensetzungen die ein Reaktionsprodukt aus einem ungesaltigten Polyether und einen Hydrogensiloxan enthalten.

Eine weitere bekannte Möglichkeit, den Widerstand der nicht ausgehärteten Dichtmasse gegen Verformungen zu erhöhen, besteht darin, den Anteil der in der Regel ohnehin enthaltenen hochdispersen Füllstoffe zu erhöhen. Zur Erzielung befriedigender Verarbeitungseigenschaften müssen die hochdispersen Füllstoffe aber in solchen Mengen in die Mischungen eingearbeitet werden, dass der dann ausgehärtete Gummi auf Grund des zu hohen Füllstoffanteils für die Anwendung als Fugendichtmasse ungenügende mechanische Eigenschaften aufweist, wie zum Beispiel eine zu hohe Härte oder eine zu geringe Dehnbarkeit.

Insgesamt wird die Erzielung optimaler Verarbeitungseigenschaften von Silicondichtmassen meist dadurch erschwert, dass dem Stand der Technik entsprechend in den Dichtmassen nicht-siliconische Weichmacher enthalten sind. In der Regel werden organische Kohlenwasserstoffe verwendet, die aus der Destillation des Erdöls und der Aufarbeitung der entsprechenden Fraktionen erhalten werden. Diese verringern sehr stark den Widerstand, den die Dichtmasse beim Glätten dem Werkzeug entgegensetzt.

Gegenstand der Erfindung sind vernetzbare Massen auf der Basis von Organosiliciumverbindungen, dadurch gekennzeichnet, dass sie mindestens eine Verbindung der Formel

H (OCH₂CH₂)ₙ(OCHCH₃CH₂)ₚ(OCH₂CH₂)ₘOH (III)

und/oder deren Umsetzungsprodukte mit hydrolysierbaren Organosiliciumverbindungen
enthalten, wobei
n 0 oder eine ganze Zahl von 1 bis 30, bevorzugt eine ganze Zahl von 1 bis 15, ist,
m 0 oder eine ganze Zahl von 1 bis 30, bevorzugt eine ganze Zahl von 1 bis 15, ist und
die Summe aus n + m größer 5 ist, sowie
p 1, 2 oder 3, bevorzugt 1 oder 2, besonders bevorzugt 1, ist.

Bei den vernetzbaren Massen handelt es sich bevorzugt um durch Kondensationsreaktion vernetzbare Massen.

Im Rahmen der vorliegenden Erfindung soll die Bezeichnung "Kondensationsreaktion" auch einen gegebenenfalls vorangehenden Hydrolyseschritt mitumfassen.

Im Rahmen der vorliegenden Erfindung sollen unter der Bezeichnung "kondensationsfähige Reste" auch solche Reste verstanden werden, die einen gegebenenfalls vorangehenden Hydrolyseschritt miteinschließen.

Besonders bevorzugt handelt es sich bei den erfindungsgemäßen Massen um solche herstellbar unter Verwendung von
(A) Organosiliciumverbindung mit mindestens zwei kondensationsfähigen Gruppen,
(B) Verbindung der Formel (III) und/oder deren Umsetzungsprodukte mit hydrolysierbaren Organosiliciumverbindungen und gegebenenfalls
(C) Vernetzer.

Bei den kondensationsfähigen Gruppen, welche die eingesetzten, an der Vernetzungsreaktion beteiligten Organosiliciumverbindungen aufweisen, kann es sich um beliebige Gruppen handeln, wie z.B. Hydroxy-, Oximato-, Amino- und Organyloxygruppen.

Bei den erfindungsgemäß eingesetzten Organosiliciumverbindungen
(A) kann es sich um alle Organosiliciumverbindungen mit mindestens zwei kondensationsfähigen Gruppen handeln, die auch bisher in durch Kondensationsreaktion vernetzbaren Massen eingesetzt worden sind. Es kann sich dabei sowohl um reine Siloxane, also ≡Si-O-Si≡ -Strukturen, als auch um Silcarbane, also ≡Si-R''-Si≡ -Strukturen mit R" gleich einem zweiwertigen, gegebenenfalls substituierten oder mit Heteroatomen unterbrochenen Kohlenwasserstoffrest oder beliebigen Organosiliciumgruppen aufweisende Copolymere handeln.

Bevorzugt handelt es sich bei den erfindungsgemäß eingesetzten Organosiliciumverbindungen (A) um solche enthaltend Einheiten der Formel

RₐY_{b}SiO_{(4-a-b)/2} (I),

wobei
R gleich oder verschieden sein kann und gegebenenfalls substituierte Kohlenwasserstoffreste, die durch Sauerstoffatome unterbrochen sein können, bedeutet,
Y gleich oder verschieden sein kann und Hydroxylrest oder hydrolysierbare Reste bedeutet,
a 0, 1, 2 oder 3, bevorzugt 1 oder 2, ist und
b 0, 1, 2 oder 3, bevorzugt 0, 1 oder 2, besonders bevorzugt 0, ist und,
mit der Maßgabe, dass die Summe aus a+b kleiner oder gleich 4 ist und pro Molekül mindestens zwei Reste Y anwesend sind.

Bevorzugt ist die Summe a+b kleiner oder gleich 3.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest. Es kann sich bei Rest R aber auch um zweiwertige Reste handeln, die z.B. zwei Silylgruppen miteinander verbinden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Methoxyethyl-, Ethoxyethyl- und der Ethoxyethoxyethylrest.

Beispiele für zweiwertige Reste R sind Polyisobutylendiylreste und propandiylterminierte Polypropylenglykolreste.

Beispiele für Reste Y sind der Hydroxylrest sowie alle bisher bekannten hydrolysierbaren Reste, wie z.B. über Sauerstoffatom oder Stickstoffatom an Siliciumatom gebundene, gegebenenfalls substituierte Kohlenwasserstoffreste.

Bevorzugt handelt es sich bei Rest Y um Hydroxylrest, Rest -OR¹, wobei R¹ gegebenenfalls substituierte Kohlenwasserstoffreste, die durch Sauerstoffatome unterbrochen sein können, bedeutet, wie Methoxy-, Ethoxy-, n-Propoxy-, i-Propoxy-, n-Butoxy-, i-Butoxy-, s-Butoxy-, tert-Butoxy- und 2-Methoxyethoxyrest, Acyloxyreste, wie der Acetoxyrest, Aminoreste, wie Methylamino-, Dimethylamino-, Ethylamino-, Diethylamino- und Cyclohexylaminorest, Amidoreste, wie N-Methylacetamido- und Benzamidorest, Aminoxyreste, wie der Diethylaminoxyrest, Oximoreste, wie Metyhlethylketoximo- und Methylisobutylketoximorest, und Enoxyreste, wie der 2-Propenoxyrest.

Beispiele für Reste R¹ sind die für R angegebenen einwertigen Reste.

Bevorzugt handelt es sich bei Rest R¹ um Alkylreste mit 1 bis 12 Kohlenstoffatomen, besonders bevorzugt um den Methyl- oder Ethylrest.

Besonders bevorzugt handelt es sich bei Rest Y um den Hydroxylrest, Reste -OR¹ mit R¹ gleich der o.g. Bedeutung, Acetoxy- und Oximoreste, insbesondere um Hydroxylrest, Methoxy-, Ethoxy-, Acetoxy- und Methylethylketoximorest, ganz besonders bevorzugt Acetoxyrest.

Besonders bevorzugt handelt es sich bei erfindungsgemäß eingesetzten Organosiliciumverbindungen (A) um solche der Formel

Y_{3-f}R_{f}Si- (SiR₂-O)ₑ-SiR_{f}Y_{3-f} (II),

wobei
R und Y jeweils gleich oder verschieden sein können und eine der oben angegebenen Bedeutungen haben,
e gleich 30 bis 3000 ist und
f gleich 1 oder 2 ist.

Vorzugsweise ist f gleich 2, wenn Y gleich -OH ist, und f gleich 1 oder 0, wenn Y gleich Methoxy-, Ethoxy- oder AcetoxyRest ist.

Beispiele für Organosiliciumverbindungen (A) sind
(MeO)₂MeSiO[SiMe₂O]₂₀₀₋₂₀₀₀SiMe(OMe)₂,
(AcO)₂MeSiO[SiMe₂O]₂₀₀₋₂₀₀₀SiMe(OAc)₂
(HO)Me₂SiO[SiMe₂O]₂₀₀₋₂₀₀₀SiMe₂(OH),
(EtO)₂MeSiO[SiMe₂O]₂₀₀₋₂₀₀₀SiMe(OEt)₂,
(HO)MeViSiO[SiMe₂O]₂₀₀₋₂₀₀₀SiMeVi(OH),
(MeO)₂ViSiO[SiMe₂O]₂₀₀₋₂₀₀₀SiVi(OMe)₂
(AcO)₂ViSiO[SiMe₂O]₂₀₀₋₂₀₀₀SiVi(OAc)₂
(AcO)₂EtSiO[SiMe₂O]₂₀₀₋₂₀₀₀SiEt(OAc)₂
(Ox)₂MeSiO[SiMe₂O]₂₀₀₋₂₀₀₀SiMe(Ox)₂
(Ox)₂ViSiO[SiMe₂O]₂₀₀₋₂₀₀₀SiVi(Ox)₂
(Ox)₂EtSiO[SiMe₂O]₂₀₀₋₂₀₀₀SiEt(Ox)₂
(Ox)₃SiO[SiMe₂O]₂₀₀₋₂₀₀₀Si(Ox)₃ und
(EtO)₂ViSiO[SiMe₂O]₂₀₀₋₂₀₀₀SiVi(OEt)₂,
wobei Me Methylrest, Et Ethylrest, Vi Vinylrest, Ac AcetoxyRest und Ox Methylethylketoximato-Rest bedeutet.

Die erfindungsgemäß eingesetzten Organosiliciumverbindungen (A) haben eine Viskosität von bevorzugt 100 bis 10⁶ mPas, besonders bevorzugt von 10³ bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Bei der erfindungsgemäß eingesetzten Komponente (B) handelt es sich bevorzugt um Verbindungen der Formel (III), wobei die OH-Gruppen bereits beim Vermischen mit den übrigen Bestandteilen der Masse, insbesondere mit Vernetzer (C), ganz oder teilweise reagieren können. Es ist jedoch durchaus möglich als Komponente (B) Umsetzungsprodukte von Verbindungen der Formel (III) mit hydrolysierbaren Organosiliciumverbindungen, wie z.B. Vernetzer (C), einzusetzen.

Bei der erfindungsgemäß eingesetzten Komponente (B) handelt es sich bevorzugt um solche der Formel (III), in denen die Summe n+m einen Wert von 5 bis 25, hat, besonders bevorzugt um solche, in denen die Summe von n+m einen Wert von 10 bis 15, insbesondere 12 bis 14, hat.

Beispiele für die erfindungsgemäß eingesetzten Verbindungen (B) sind H (OCH₂CH₂)₅(OCHCH₃CH₂) (OCH₂CH₂)₁₀OH,
H (OCH₂CH₂)₆(OCHCH₃CH₂) (OCH₂CH₂)₇OH,
H (OCH₂CH₂)₅(OCHCH₃CH₂) (OCH₂CH₂)₂₀OH,
H (OCH₂CH₂)₇(OCHCH₃CH₂) (OCH₂CH₂)₇OH,
H (OCH₂CH₂)₂(OCHCH₃CH₂) (OCH₂CH₂)₁₂OH,
H (OCH₂CH₂)₅(OCHCH₃CH₂)₂ (OCH₂CH₂)₁₀OH,
H (OCH₂CH₂)₆(OCHCH₃CH₂)₂ (OCH₂CH₂) ₆OH und/oder deren Umsetzungsprodukte mit Vernetzer (C),
wobei H (OCH₂CH₂)₅(OCHCH₃CH₂) (OCH₂CH₂)₁₀OH,
H (OCH₂CH₂)₆(OCHCH₃CH₂) (OCH₂CH₂)₇OH,
H (OCH₂CH₂)₅(OCHCH₃CH₂) (OCH₂CH₂)₂₀OH,
H (OCH₂CH₂)₇(OCHCH₃CH₂) (OCH₂CH₂)₇OH,
H (OCH₂CH₂)₂(OCHCH₃CH₂) (OCH₂CH₂)₁₂OH und/oder deren Umsetzungsprodukte mit Vernetzer (C)
bevorzugt und H (OCH₂CH₂)₆(OCHCH₃CH₂) (OCH₂CH₂)₇OH,
H (OCH₂CH₂)₇(OCHCH₃CH₂) (OCH₂CH₂)₇OH,
H (OCH₂CH₂)₂(OCHCH₃CH₂) (OCH₂CH₂)₁₂OH
und/oder deren Umsetzungsprodukte mit Vernetzer (C)
besonders bevorzugt sind.

Verbindungen (B) sind handelsübliche Produkte bzw. können nach in der Organischen Chemie gängigen Methoden hergestellt werden.

Die erfindungsgemäßen Massen enthalten Komponente (B) in Mengen von vorzugsweise 0,01 bis 5 Gewichtsteilen, besonders bevorzugt 0,05 bis 1,0 Gewichtsteilen, insbesondere 0,1 bis 0,7 Gewichtsteilen, jeweils bezogen auf 100 Gewichtsteile Organosiliciumverbindung (A).

Bei den in den erfindungsgemäßen Massen gegebenenfalls eingesetzten Vernetzern (C) kann es sich um beliebige, bisher bekannte Vernetzer mit mindestens drei kondensationsfähigen Resten handeln, wie beispielsweise Silane oder Siloxane mit mindestens drei Organyloxygruppen.

Bei den in den erfindungsgemäßen Massen gegebenenfalls eingesetzten Vernetzern (C) handelt es sich vorzugsweise um Organosiliciumverbindungen der Formel

Z_{c}SiR²_{(4-c)} (IV),

wobei
R² gleich oder verschieden sein kann und einwertige, gegebenenfalls substituierte Kohlenwasserstoffreste, die durch Sauerstoffatome unterbrochen sein können, bedeutet,
Z gleich oder verschieden sein kann und eine oben für Y genannte Bedeutung ausgenommen Hydroxylgruppe besitzt und
c 3 oder 4 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (IV), wie auch um Teilcohydrolysate, d.h. Teilhydrolysate von mindestens zwei verschiedenen Arten von Organosiliciumverbindungen der Formel (IV).

Obwohl in Formel (IV) nicht angegeben, können die erfindungsgemäß gegebenenfalls eingesetzten Organosiliciumverbindungen herstellungsbedingt einen geringen Anteil von Hydroxylgruppen, bevorzugt bis maximal 5 % aller Si-gebundenen Reste, aufweisen.

Handelt es sich bei den in den erfindungsgemäßen Massen gegebenenfalls eingesetzten Vernetzern (C) um Teilhydrolysate von Organosiliciumverbindungen der Formel (IV), so sind solche mit bis zu 6 Siliciumatomen bevorzugt.

Beispiele für Rest R² sind die oben für Rest R genannten einwertigen Beispiele, wobei Kohlenwasserstoffreste mit 1 bis 12 Kohlenstoffatomen bevorzugt und der Methyl- und der Vinylrest besonders bevorzugt sind.

Beispiele für Z sind die für Y angegebenen Beispiele ausgenommen Hydroxylgruppe.

Bevorzugt handelt es sich bei den in den erfindungsgemäßen Massen gegebenenfalls eingesetzten Vernetzern (C) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis(trimethoxysilyl)ethan, 1,2-Bis(triethoxysilyl)ethan, Methyltris(methylethylketoximo)silan, Vinyltris(methylethylketoximo)silan, Tetrakis-(methylethylketoximo)silan, Methyltriacetoxysilan, Ethyltriacetoxysilan, Vinyltriacetoxysilan, Dimethyldiacetoxysilan, Methylvinyldiacetoxysilan sowie Teilhydrolysate der genannten Organosiliciumverbindungen, wie z.B. Hexaethoxydisiloxan.

Besonders bevorzugt handelt es sich bei den in den erfindungsgemäßen Massen gegebenenfalls eingesetzten Vernetzern (C) um Tetramethoxysilan, Tetraethoxysilan, Tetrapropoxysilan, Methyltrimethoxysilan, Methyltriethoxysilan, Vinyltrimethoxysilan, Vinyltriethoxysilan, Phenyltrimethoxysilan, 1,2-Bis(trimethoxysilyl)ethan, 1,2-Bis(triethoxysilyl)ethan, Methyltris(methylethylketoximo)silan, Vinyltris(methylethylketoximo)-silan, Methyltriacetoxysilan, Ethyltriacetoxysilan, Vinyltriacetoxysilan sowie deren Teilhydrolysate, insbesondere um Methyltrimethoxysilan, Vinyltriethoxysilan, Methyltris(methylethylketoximo)silan, Vinyltris(methylethylketoximo)silan, Methyltriacetoxysilan, Ethyltriacetoxysilan, Vinyltriacetoxysilan sowie deren Teilhydrolysate.

Die in den erfindungsgemäßen Massen gegebenenfalls eingesetzten Vernetzer (C) sind handelsübliche Produkte bzw. können nach in der Siliciumchemie bekannten Verfahren hergestellt werden.

Falls die erfindungsgemäßen Massen Vernetzer (C) enthalten, handelt es sich um Mengen von vorzugsweise 0,01 bis 20 Gewichtsteilen, besonders bevorzugt 0,5 bis 10 Gewichtsteilen, insbesondere 3 bis 8 Gewichtsteilen, jeweils bezogen auf 100 Gewichtsteile Organosiliciumverbindung (A).

Zusätzlich zu den oben beschriebenen Komponenten (A), (B) und gegebenenfalls (C) können die erfindungsgemäßen Massen nun alle weiteren Stoffe enthalten, die auch bisher in durch Kondensationsreaktion vernetzbaren Massen eingesetzt worden sind, wie z.B. Härtungsbeschleuniger (D), Weichmacher (E), Füllstoffe (F), Haftvermittler (G) und Additive (H).

Als Härtungsbeschleuniger (D) können alle Härtungsbeschleuniger, die auch bisher in durch Kondensationsreaktion vernetzbare Massen eingesetzt werden, verwendet werden. Beispiele für Härtungsbeschleuniger (D) sind Titanverbindungen und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen, wie Tetraethoxysilan, wobei Din-butylzinndiacetat und Dibutylzinnoxid in Tetraethylsilikat-Hydrolysat bevorzugt sind und Di-n-butylzinnoxid in Tetraethylsilikat-Hydrolysat besonders bevorzugt ist.

Falls die erfindungsgemäßen Massen Härtungsbeschleuniger (D) enthalten, handelt es sich um Mengen von vorzugsweise 0,01 bis 3 Gewichtsteilen, bevorzugt 0,05 bis 2 Gewichtteilen, jeweils bezogen auf 100 Gewichtsteile Bestandteil (A).

Beispiele für Weichmacher (E) sind bei Raumtemperatur flüssige, durch Trimethylsiloxygruppen endblockierte Dimethylpolysiloxane, insbesondere mit Viskositäten bei 25°C im Bereich zwischen 50 und 1000 mPas, bei Raumtemperatur und Umgebungsdruck flüssige Organopolysiloxane, die im wesentlichen aus -SiO_{3/2}- und =SiO_{1/2}-Einheiten, sogenannte T- und M-Einheiten, bestehen, sowie hochsiedende Kohlenwasserstoffe, wie zum Beispiel Paraffinöle oder Mineralöle bestehend im wesentlichen aus naphthenischen und paraffinischen Einheiten.

Bevorzugt handelt es sich bei Weichmacher (E) um hochsiedende Kohlenwasserstoffe.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organosiliciumverbindung (A).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (F) eingesetzt werden, handelt es sich bevorzugt um hydrophile pyrogene Kieselsäure und gefälltes oder gemahlenes Calciumcarbonat.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organosiliciumverbindung (A).

Beispiele für die in den erfindungsgemäßen Massen eingesetzten Haftvermittler (G) sind Silane und Organopolysiloxane mit funktionellen Gruppen, wie beispielsweise solche mit Glycidoxypropyl-, Aminopropyl- oder Methacryloxypropylresten. Falls jedoch bereits eine andere Komponente, wie etwa Organosiliciumverbindung (A) oder Vernetzer (C) die genannten funktionellen Gruppen aufweist, kann auf einen Zusatz von Haftvermittler verzichtet werden.

Die erfindungsgemäßen Massen enthalten Haftvermittler (G) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organosiliciumverbindung (A).

Beispiele für Additive (H) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Fungizide, Mittel zur Verlängerung der Hautbildungszeit, wie Silane mit einem SiCgebundenen Mercaptoalkylrest, zellenerzeugende Mittel, z.B. A-zodicarbonamid, Hitzestabilisatoren, Scavenger, wie Si-N enthaltende Silazane oder Silylamide, Cokatalysatoren, wie Lewis- und Brönstedsäuren, z.B. Sulfonsäuren, Phosphorsäuren, Phoshorsäureester, Phosphonsäuren und Phosphonsäureester, Thixotropiermittel, wie beispielsweise Phosphorsäureester, organischen Lösungsmittel, wie Alkylaromaten, sowie beliebige Siloxane, die unterschiedlich zu Komponente (A) sind.

Beispiele für Siloxane, die als Komponente (H) eingesetzt werden können, sind solche aus Einheiten der Formel (I), die pro Molekül genau einen Rest Y enthalten, wie z.B. Monohydroxydiorganopolysiloxane. Solche monofunktionellen Siloxane werden bevorzugt zur Steuerung des Moduls eingesetzt.

Falls die erfindungsgemäßen Massen Additive (H) enthalten, was bevorzugt ist, handelt es sich um Mengen von vorzugsweise 0,01 bis 100 Gewichtsteile, besonders bevorzugt 0,1 bis 30 Gewichtsteilen, insbesondere 0,3 bis 10 Gewichtsteilen, jeweils bezogen auf 100 Gewichtsteile Organosiliciumverbindung (A).

Insbesondere bevorzugt handelt es sich bei den erfindungsgemäßen Massen um solche, die aus
(A) Organosiliciumverbindungen enthaltend Einheiten der Formel (I),
(B) Verbindung der Formel (III) und/oder deren Umsetzungsprodukte mit hydrolysierbaren Organosiliciumverbindungen Gegebenenfalls,
(C) Vernetzer der Formel (IV),
   gegebenenfalls
(D) Härtungsbeschleuniger,
   gegebenenfalls
(E) Weichmacher,
   gegebenenfalls
(F) Füllstoffe,
   gegebenenfalls
(G) Haftvermittler und
   gegebenenfalls
(H) Additive
   bestehen.

Bei den erfindungsgemäßen Massen handelt es sich bevorzugt um zähflüssig bis pastöse Massen.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35°C bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30°C bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Vitrinen, sowie z.B. zur Herstellung von Schutzüberzügen, einschließlich solcher für der ständigen Einwirkung von Süß- oder Meerwasser ausgesetzte Oberflächen oder das Gleiten verhindernden Überzügen oder von gummielastischen Formkörpern sowie für die Isolierung von elektrischen oder elektronischen Vorrichtungen.

Die erfindungsgemäßen Massen haben den Vorteil, dass sie leicht herzustellen sind und der Verformung einen hohen Widerstand entgegensetzen.

Des Weiteren haben die erfindungsgemäßen Massen den Vorteil, dass sie eine sehr gute Handhabbarkeit bei der Anwendung zeigen und bei einer Vielzahl von Applikation ausgezeichnete Verarbeitungseigenschaften zeigen.

Die erfindungsgemäßen vernetzbaren Massen haben den Vorteil, dass sie sich durch eine sehr hohe Lagerstabilität und eine hohe Vernetzungsgeschwindigkeit auszeichnen.

Ferner haben die erfindungsgemäßen Massen den Vorteil, dass sie bei der Anwendung einen kurzen Fadenzug aufweisen und im ausgehärteten Zustand durch einen niedrigen Modul gekennzeichnet sind.

In den nachstehend beschriebenen Beispielen beziehen sich alle Viskositätsangaben, sofern nicht anders angegeben, auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

520 g eines α,ω-Dihydroxypolydimethylsiloxans mit einer Viskosität von 80 000 mPa.s und 190 g eines Kohlenwasserstoffgemisches mit einer kinematischen Viskosität von 6,2 mm²/s bei 40°C, einer Viskositäts-Dichte-Konstante von 0,79 und einem Siedebereich von 300 bis 370°C, wurden in einem Planetenmischer mit 22 g Ethyltriacetoxysilan und 10 g Methyltriacetoxysilan 5 Minuten vermischt. Anschließend wurden 60 g pyrogene Kieselsäure mit einer spezifischen Oberfläche von 150 m²/g (käuflich erhältlich unter der Marke HDK® V15 bei der Wacker Chemie AG, D-München) eingearbeitet. Nach 20 minütigem Homogenisieren im Vakuum wurden 2,4 g Polyalkylenglykol, bestehend aus ca. 13 Ethylenoxid-Einheiten und 1 Propylenoxid-Einheit, mit einer Molmasse von ca. 600 g/mol, und 0,4 g Dibutylzinndiacetat unter Vakuum eingemischt. Das hergestellte Produkt wurde zur Aufbewahrung in feuchtigkeitsdichte Gebinde abgefüllt.

### Vergleichsbeispiel 1A

520 g eines α,ω-Dihydroxypolydimethylsiloxans mit einer Viskosität von 80 000 mPa.s und 190 g eines Kohlenwasserstoffgemisches mit einer kinematischen Viskosität von 6,2 mm²/s bei 40°C, einer Viskositäts-Dichte-Konstante von 0,79 und einem Siedebereich von 300 bis 370°C, wurden in einem Planetenmischer mit 22 g Ethyltriacetoxysilan und 10 g Methyltriacetoxysilan 5 Minuten vermischt. Anschließend wurden 60 g pyrogene Kieselsäure mit einer spezifischen Oberfläche von 150 m²/g (käuflich erhältlich unter der Marke HDK^{®} V15 bei der Wacker Chemie AG, D-München) eingearbeitet. Nach 20 minütigem Homogenisieren im Vakuum wurden 0,4 g Dibutylzinndiacetat unter Vakuum eingemischt. Das hergestellte Produkt wurde zur Aufbewahrung in feuchtigkeitsdichte Gebinde abgefüllt.

### Vergleichsbeispiel 1B

520 g eines α,ω-Dihydroxypolydimethylsiloxans mit einer Viskosität von 80 000 mPa.s und 190 g eines Kohlenwasserstoffgemisches mit einer kinematischen Viskosität von 6,2 mm²/s bei 40°C, einer Viskositäts-Dichte-Konstante von 0,79 und einem Siedebereich von 300 bis 370°C, wurden in einem Planetenmischer mit 22 g Ethyltriacetoxysilan und 10 g Methyltriacetoxysilan 5 Minuten vermischt. Anschließend wurden 60 g pyrogene Kieselsäure mit einer spezifischen Oberfläche von 150 m²/g (käuflich erhältlich unter der Marke HDK® V15 bei der Wacker Chemie AG, D-München) eingearbeitet. Nach 20 minütigem Homogenisieren im Vakuum wurden 2,4 g Polyethylenglykol mit einer Molmasse von ca. 600 g/mol und 0,4 g Dibutylzinndiacetat unter Vakuum eingemischt. Das hergestellte Produkt wurde zur Aufbewahrung in feuchtigkeitsdichte Gebinde abgefüllt.

### Vergleichsbeispiel 1C

520 g eines α,ω-Dihydroxypolydimethylsiloxans mit einer Viskosität von 80 000 mPa.s und 190 g eines Kohlenwasserstoffgemisches mit einer kinematischen Viskosität von 6,2 mm²/s bei 40°C, einer Viskositäts-Dichte-Konstante von 0,79 und einem Siedebereich von 300 bis 370°C, wurden in einem Planetenmischer mit 22 g Ethyltriacetoxysilan und 10 g Methyltriacetoxysilan 5 Minuten vermischt. Anschließend wurden 60 g pyrogener Kieselsäure mit einer spezifischen Oberfläche von 150 m²/g (käuflich erhältlich unter der Marke HDK^{®} V15 bei der Wacker Chemie AG, D-München) eingearbeitet. Nach 20 minütigem Homogenisieren im Vakuum wurden 2,4 g Polypropylenglykol mit einer Molmasse von ca. 725 g/mol und 0,4 g Dibutylzinndiacetat unter Vakuum eingemischt. Das hergestellte Produkt wurde zur Aufbewahrung in feuchtigkeitsdichte Gebinde abgefüllt.

Alle hergestellten Dichtmassen wiesen eine Hautbildungszeit von 20 Minuten auf (25°C, 50 % relative Luftfeuchtigkeit) und härteten innerhalb von 7 Tagen (25°C, 50 % relative Luftfeuchtigkeit) zu gummielastischen Material mit einer Shore A Härte von 20 aus (ISO 868).

Die nicht ausgehärteten Proben wurden anwendungstechnisch bei 25°C charakterisiert. Die Ergebnisse finden sich in Tabelle 1.

Die Ermittlung der Auspressrate erfolgte aus 310ml-PE-Kartuschen unter einem Auspressdruck von 2,5 bar und einem Düsendurchmesser von 3,0 mm.

Zur Ermittlung des Widerstandes der Dichtmassen gegen Verformung wurde mit Hilfe einer Zwick-Prüfmaschine eine Halbkugel
von 25 mm Durchmesser und 5 mm zylindrischer Verlängerung in einen 50 ml PE-Becher gedrückt. Die Messung begann jeweils sofort nach dem blasenfreien Verfüllen des Bechers mit nicht ausgehärteter Dichtmasse und dem Ebenen der Oberfläche.

Als Fadenzug wurde die Länge bestimmt, die die Halbkugel nach dem Eindringen von 20 mm in die Dichtmasse beim Herausziehen zurücklegt, bis es zum Durchreißen der anhaftenden Dichtmasse kommt.

**Tabelle 1**

| | Auspressrate in g/min | Maximale Eindringkraft in g | Fadenzug in mm |
|---|---|---|---|
| Beispiel 1 | 85 | 336 | 11 |
| Vergleichsbeispiel 1A | 102 | 232 | 17 |
| Vergleichsbeispiel 1B | 97 | 333 | 14 |
| Vergleichsbeispiel 1C | 94 | 253 | 14 |

Die Mischung des Beispiels 1 zeigt den gewünscht kurzen Fadenzug bei gleichzeitig hoher Eindringkraft, wobei auch die Auspressrate einen gewünscht niedrigen Wert aufweist.

### Beispiel 2

470 g eines α,ω-Dihydroxypolydimethylsiloxans mit einer Viskosität von 80 000 mPa.s und 240 g eines trimethylsilylendblockierten Polydimethylsiloxans mit einer Viskosität von 1000 mPa.s wurden in einem Planetenmischer mit 24 g Ethyltriacetoxysilan und 12 g Methyltriacetoxysilan 5 Minuten vermischt. Anschließend wurden 60 g pyrogene Kieselsäure mit einer spezifischen Oberfläche von 150 m²/g (käuflich erhältlich unter der Marke HDK^{®} V15 bei der Wacker Chemie AG, D-München) eingearbeitet. Nach 20 minütigem Homogenisieren im Vakuum wurden 2,4 g Polyalkylenglykol, bestehend aus ca. 13 Ethylenoxid-Einheiten und 1 Propylenoxid-Einheit, mit einer Molmasse von ca. 600 g/mol, und 0,4 g Dibutylzinndiacetat unter Vakuum eingemischt. Das hergestellte Produkt wurde zur Aufbewahrung in feuchtigkeitsdichte Gebinde abgefüllt.

### Vergleichsbeispiel 2A

470 g eines α,ω-Dihydroxypolydimethylsiloxans mit einer Viskosität von 80 000 mPa.s und 240 g eines trimethylsilylendblockierten Polydimethylsiloxans mit einer Viskosität von 1000 mPa.s wurden in einem Planetenmischer mit 24 g Ethyltriacetoxysilan und 11 g Methyltriacetoxysilan 5 Minuten vermischt. Anschließend wurden 60 g pyrogener Kieselsäure mit einer spezifischen Oberfläche von 150 m²/g (käuflich erhältlich unter der Marke HDK^{®} V15 bei der Wacker Chemie AG, D-München) eingearbeitet. Nach 20 minütigem Homogenisieren im Vakuum wurden 0,4 g Dibutylzinndiacetat unter Vakuum eingemischt. Das hergestellte Produkt wurde zur Aufbewahrung in feuchtigkeitsdichte Gebinde abgefüllt.

Beide hergestellten Dichtmassen wiesen eine Hautbildungszeit von 20 Minuten auf (25°C, 50 % relative Luftfeuchtigkeit) und härteten innerhalb von 7 Tagen (25°C, 50 % relative Luftfeuchtigkeit) zu gummielastischen Material mit einer Shore A Härte
von 21 aus (ISO 868).

Die nicht ausgehärteten Proben wurden anwendungstechnisch bei 25°C wie in Beispiel 1 beschrieben charakterisiert. Die Ergebnisse finden sich in Tabelle 2.

**Tabelle 2**

| | Auspressrate in g/min | Maximale Eindringkraft in g | Fadenzug in mm |
|---|---|---|---|
| Beispiel 2 | 53 | 437 | 12 |
| Vergleichsbeispiel 2A | 65 | 320 | 14 |

Die Mischung des Beispiels 2 zeigt die gewünscht hohe Eindringkraft bei minimaler Auspressrate.

### Beispiel 3

480 g eines Polydimethylsiloxangemischs, bei denen die Siloxane mit Dimethoxymethylsilyl- und/oder Dimethoxyvinylsilylgruppen terminiert sind und das Verhältnis von Dimethoxymethylsilyl-Endgruppen zu Dimethoxyvinylsilyl-Endgruppen in etwa 1:1 ist,
mit einer Viskosität von 80 000 mPa.s, 175 g eines trimethylsilylendblockierten Polydimethylsiloxans mit einer Viskosität von 1000 mPa·s, 40 g eines Kohlenwasserstoffgemisches mit einer kinematischen Viskosität von 6,2 mm²/s bei 40°C, einer Viskositäts-Dichte-Konstante von 0,79 und einem Siedebereich von 300 bis 370°C, 25 g Methyltrimethoxysilan, 20 g eines Haftvermittlers, der hergestellt wird durch die Umsetzung von 1 Teil Aminopropyltriethoxysilan mit 1 Teil Methyltriethoxysilan-Hydrolysat mit einem Ethoxygehalt von 37 %, und 7 g Aminopropyltrimethoxysilan werden in einem Planetenmischer miteinander gemischt und 15 Minuten gerührt. Anschließend wird der Ansatz durch homogenes Einmischen von 63 g pyrogener Kieselsäure mit einer spezifischen Oberfläche von 150 m²/g, 1,5 g Octylphosphonsäure, 2,4 g Polyalkylenglykol, bestehend aus ca. 13 Ethylenoxid-Einheiten und 1 Propylenoxid-Einheit, mit einer Molmasse von ca. 600 g/mol, und 2,8 g eines Zinnkatalysators, der hergestellt wird durch Umsetzung von Di-n-butylzinndiacetat und Tetraethoxysilan, vervollständigt.
Das hergestellte Produkt wurde zur Aufbewahrung in feuchtigkeitsdichte Gebinde abgefüllt.

### Vergleichsbeispiel 3A

560 g eines Polydimethylsiloxangemischs, bei denen die Siloxane mit Dimethoxymethylsilyl- und/oder Dimethoxyvinylsilylgruppen terminiert sind und das Verhältnis von Dimethoxymethylsilyl-Endgruppen zu Dimethoxyvinylsilyl-Endgruppen in etwa 1:1 ist, mit einer Viskosität von 80 000 mPa·s, 90 g eines trimethylsilylendblockierten Polydimethylsiloxans mit einer Viskosität von 1000 mPa·s, 40 g eines Kohlenwasserstoffgemisches mit einer kinematischen Viskosität von 6,2 mm²/s bei 40°C, einer Viskositäts-Dichte-Konstante von 0,79 und einem Siedebereich von 300 bis 370°C, 25 g Methyltrimethoxysilan, 20 g eines Haftvermittlers, der hergestellt wird durch die Umsetzung von 1 Teil Aminopropyltriethoxysilan mit 1 Teil Methyltriethoxysilan-Hydrolysat mit einem Ethoxygehalt von 37 %, und 7 g Aminopropyltrimethoxysilan werden in einem Planetenmischer miteinander gemischt und 15 Minuten gerührt. Anschließend wird der Ansatz durch homogenes Einmischen von 63 g pyrogener Kieselsäure mit einer spezifischen Oberfläche von 150 m²/g, 1,5 g Octylphosphonsäure und 2,8 g eines Zinnkatalysators, der hergestellt wird durch Umsetzung von Di-n-butylzinndiacetat und Tetraethoxysilan, vervollständigt.
Das hergestellte Produkt wurde zur Aufbewahrung in feuchtigkeitsdichte Gebinde abgefüllt.

Beide hergestellten Dichtmassen wiesen eine Hautbildungszeit von 10 Minuten auf (25°C, 50 % relative Luftfeuchtigkeit) und härteten innerhalb von 7 Tagen (25°C, 50 % relative Luftfeuchtigkeit) zu gummielastischen Material mit einer Shore A Härte von 19 aus (ISO 868).
Die nicht ausgehärteten Proben wurden anwendungstechnisch bei 25°C wie in Beispiel 1 beschrieben charakterisiert. Die Ergebnisse finden sich in Tabelle 3.

**Tabelle 3**

| | Auspressrate in g/min | Maximale Eindringkraft in g | Fadenzug in mm |
|---|---|---|---|
| Beispiel 3 | 62 | 432 | 11 |
| Vergleichsbeispiel 3A | 77 | 366 | 12 |

Die Mischung des Beispiels 3 zeigt die gewünscht hohe Eindringkraft bei minimaler Auspressrate.

### Beispiel 4

300 g eines Polydimethylsiloxangemischs, bei denen die Siloxane
mit Dimethoxymethylsilyl- und/oder Dimethoxyvinylsilylgruppen terminiert sind und das Verhältnis von Dimethoxymethylsilyl-Endgruppen zu Dimethoxyvinylsilyl-Endgruppen in etwa 1:1 ist,
mit einer Viskosität von 300 000 mPa·s, 180 g eines trimethylsilylendblockierten Polydimethylsiloxans mit einer Viskosität von 1000 mPa·s, 25 g Methyltrimethoxysilan und 20 g eines Haftvermittlers, der hergestellt wird durch die Umsetzung von 1 Teil Aminopropyltriethoxysilan mit 1 Teil Methyltriethoxysilan-Hydrolysat mit einem Ethoxygehalt von 37 %, werden in einem Planetenmischer miteinander gemischt und 15 Minuten gerührt. Anschließend wird der Ansatz durch homogenes Einmischen von 240 g gemahlenem Calciumcarbonat mit einem mittleren Teilchendurchmesser von 5 Mikrometern, 40 g pyrogener Kieselsäure mit einer spezifischen Oberfläche von 150 m²/g, 1,5 g Octylphosphonsäure, 2,4 g Polyalkylenglykol, bestehend aus ca. 13 Ethylenoxid-Einheiten und 1 Propylenoxid-Einheit, mit einer Molmasse von ca. 600 g/mol, und 2,8 g eines Zinnkatalysators, der hergestellt wird durch Umsetzung von Di-n-butylzinndiacetat und Tetraethoxysilan, vervollständigt.
Das hergestellte Produkt wurde zur Aufbewahrung in feuchtigkeitsdichte Gebinde abgefüllt.

### Vergleichsbeispiel 4A

300 g eines Polydimethylsiloxangemischs, bei denen die Siloxane mit Dimethoxymethylsilyl- und/oder Dimethoxyvinylsilylgruppen terminiert sind und das Verhältnis von Dimethoxymethylsilyl-Endgruppen zu Dimethoxyvinylsilyl-Endgruppen in etwa 1:1 ist, mit einer Viskosität von 300 000 mPa·s, 180 g eines trimethylsilylendblockierten Polydimethylsiloxans mit einer Viskosität von 1000 mPa·s, 25 g Methyltrimethoxysilan und 20 g eines Haftvermittlers, der hergestellt wird durch die Umsetzung von 1 Teil Aminopropyltriethoxysilan mit 1 Teil Methyltriethoxysilan-Hydrolysat mit einem Ethoxygehalt von 37 %, werden in einem Planetenmischer miteinander gemischt und 15 Minuten gerührt. Anschließend wird der Ansatz durch homogenes Einmischen von 240 g gemahlenem Calciumcarbonat mit einem mittleren Teilchendurchmesser von 5 Mikrometern, 40 g pyrogener Kieselsäure mit einer spezifischen Oberfläche von 150 m²/g, 2,0 g Octylphosphonsäure und 2,0 g eines Zinnkatalysators, der hergestellt wird durch Umsetzung von Di-n-butylzinndiacetat und Tetraethoxysilan, vervollständigt.

Das hergestellte Produkt wurde zur Aufbewahrung in feuchtigkeitsdichte Gebinde abgefüllt.

Beide hergestellten Dichtmassen wiesen eine Hautbildungszeit von 10 Minuten auf (25°C, 50 % relative Luftfeuchtigkeit) und härteten innerhalb von 7 Tagen (25°C, 50 % relative Luftfeuchtigkeit) zu gummielastischen Material mit einer Shore A Härte von 20 aus (ISO 868).
Die nicht ausgehärteten Proben wurden anwendungstechnisch bei 25°C wie in Beispiel 1 beschrieben charakterisiert. Die Ergebnisse finden sich in Tabelle 4.

**Tabelle 4**

| | Auspressrate in g/min | Maximale Eindringkraft in g | Fadenzug in mm |
|---|---|---|---|
| Beispiel 4 | 36 | 302 | 23 |
| Vergleichsbeispiel 4A | 41 | 230 | 30 |

Die Mischung des Beispiels 4 zeigt die gewünscht hohe Eindringkraft bei minimaler Auspressrate und geringem Fadenzug.

### Beispiel 5

420 g eines α,ω-Dihydroxypolydimethylsiloxans mit einer Viskosität von 80 000 mPa.s und 260 g eines trimethylsilylendblockierten Polydimethylsiloxans mit einer Viskosität von 1000 mPa.s wurden in einem Planetenmischer mit 36 g Methyltributanonoximosilan und 4 g Tetrabutanonoximosilan 5 Minuten vermischt. Anschließend wurden 64 g pyrogene Kieselsäure mit einer spezifischen Oberfläche von 150 m²/g (käuflich erhältlich unter der Marke HDK^{®} V15 bei der Wacker Chemie AG, D-München) eingearbeitet. Nach 20 minütigem Homogenisieren im Vakuum wurden 2,4 g Polyalkylenglykol, bestehend aus ca. 13 Ethylenoxid-Einheiten und 1 Propylenoxid-Einheit, mit einer Molmasse von ca. 600 g/mol, 15 g eines Haftvermittlers, der hergestellt wird durch die Umsetzung von 1 Teil Aminopropyltriethoxysilan mit 1 Teil Methyltriethoxysilan-Hydrolysat mit einem Ethoxygehalt von 37 %, und 0,4 g eines Zinnkatalysators, der hergestellt wird durch Umsetzung von Di-n-butylzinndiacetat und Tetraethoxysilan, unter Vakuum eingemischt.
Das hergestellte Produkt wurde zur Aufbewahrung in feuchtigkeitsdichte Gebinde abgefüllt.

### Vergleichsbeispiel 5A

420 g eines α,ω-Dihydroxypolydimethylsiloxans mit einer Viskosität von 80 000 mPa.s und 260 g eines trimethylsilylendblockierten Polydimethylsiloxans mit einer Viskosität von 1000 mPa.s wurden in einem Planetenmischer mit 36 g Methyltributanonoximosilan und 4 g Tetrabutanonoximosilan 5 Minuten vermischt. Anschließend wurden 64 g pyrogener Kieselsäure mit einer spezifischen Oberfläche von 150 m²/g (käuflich erhältlich unter der Marke HDK^{®} V15 bei der Wacker Chemie AG, D-München) eingearbeitet. Nach 20 minütigem Homogenisieren im Vakuum wurden 15 g eines Haftvermittlers, der hergestellt wird durch die Umsetzung von 1 Teil Aminopropyltriethoxysilan mit 1 Teil Methyltriethoxysilan-Hydrolysat mit einem Ethoxygehalt von 37 %, und 0,4 g eines Zinnkatalysators, der hergestellt wird durch Umsetzung von Di-n-butylzinndiacetat und Tetraethoxysilan, unter Vakuum eingemischt.
Das hergestellte Produkt wurde zur Aufbewahrung in feuchtigkeitsdichte Gebinde abgefüllt.

Beide hergestellten Dichtmassen wiesen eine Hautbildungszeit von 15 Minuten auf (25°C, 50 % relative Luftfeuchtigkeit) und härteten innerhalb von 7 Tagen (25°C, 50 % relative Luftfeuchtigkeit) zu gummielastischen Material mit einer Shore A Härte von 20 aus (ISO 868).

Die nicht ausgehärteten Proben wurden anwendungstechnisch bei 25°C wie in Beispiel 1 beschrieben charakterisiert. Die Ergebnisse finden sich in Tabelle 5.

**Tabelle 5**

| | Auspressrate in g/min | Maximale Eindringkraft in g | Fadenzug in mm |
|---|---|---|---|
| Beispiel 5 | 37 | 456 | 16 |
| Vergleichsbeispiel 5A | 39 | 396 | 18 |

Die Mischung des Beispiels 5 zeigt die gewünscht hohe Eindringkraft bei geringer Auspressrate und geringerem Fadenzug.

## Patentansprüche

1. Vernetzbare Massen auf der Basis von Organosiliciumverbindungen, **dadurch gekennzeichnet, dass** sie mindestens eine Verbindung der Formel
H(OCH₂CH₂)ₙ(OCHCH₃CH₂)ₚ(OCH₂CH₂)ₘOH (III)
und/oder deren Umsetzungsprodukte mit hydrolysierbaren Organosiliciumverbindungen enthalten, wobei
n 0 oder eine ganze Zahl von 1 bis 30 ist,
m 0 oder eine ganze Zahl von 1 bis 30 ist und
die Summe aus n + m größer 5 ist, sowie
p 1, 2 oder 3 ist.

2. Vernetzbare Massen gemäß Anspruch 1, **dadurch gekennzeichnet, dass** p gleich 1 oder 2 ist.

3. Vernetzbare Massen gemäß Anspruch 1 oder 2, **dadurch gekennzeichnet, dass** p gleich 1 ist.

4. Vernetzbare Massen gemäß einem oder mehreren der Ansprüche 1 bis 3, **dadurch gekennzeichnet, dass** es sich um durch Kondensationsreaktion vernetzbare Massen handelt.

5. Vernetzbare Massen gemäß einem oder mehreren der Ansprüche 1 bis 4, **dadurch gekennzeichnet, dass** es sich um solche herstellbar unter Verwendung von
(A) Organosiliciumverbindung mit mindestens zwei kondensationsfähigen Gruppen,
(B) Verbindung der Formel (III) und/oder deren Umsetzungsprodukte mit hydrolysierbaren Organosiliciumverbindungen und gegebenenfalls
(C) Vernetzer
handelt.

6. Vernetzbare Massen gemäß Anspruch 5, **dadurch gekennzeichnet, dass** sie Komponente (B) in Mengen von 0,01 bis 5 Gewichtsteilen, bezogen auf 100 Gewichtsteile Organosiliciumverbindung (A) enthalten.

7. Vernetzbare Massen gemäß einem oder mehreren der Ansprüche 1 bis 6, **dadurch gekennzeichnet, dass** es sich um solche handelt, die aus
(A) Organosiliciumverbindungen enthaltend Einheiten der Formel (I),
(B) Verbindung der Formel (III) und/oder deren Umsetzungsprodukte mit hydrolysierbaren Organosiliciumverbindungen,
gegebenenfalls
(C) Vernetzer der Formel (IV),
gegebenenfalls
(D) Härtungsbeschleuniger,
gegebenenfalls
(E) Weichmacher,
gegebenenfalls
(F) Füllstoffe,
gegebenenfalls
(G) Haftvermittler und
gegebenenfalls
(H) Additive
bestehen.

8. Formkörper, hergestellt durch Vernetzung der erfindungsgemäßen Massen gemäß einem oder mehreren der Ansprüche 1 bis 7.

## Claims

1. Crosslinkable compositions based on organosilicon compounds, **characterized in that** they comprise at least one compound of the formula
H(OCH₂CH₂)ₙ(OCHCH₃CH₂)ₚ(OCH₂ CH₂)ₘOH (III)
and/or reaction products thereof with hydrolyzable organosilicon compounds, where
n is 0 or a whole number from 1 to 30,
m is 0 or a whole number from 1 to 30, and
the sum of n and m is greater than 5, and
p is 1, 2, or 3.

2. Crosslinkable compositions according to Claim 1, **characterized in that** p is equal to 1 or 2.

3. Crosslinkable compositions according to Claim 1 or 2, **characterized in that** p is equal to 1.

4. Crosslinkable compositions according to one or more of Claims 1 to 3, **characterized in that** they are compositions crosslinkable via a condensation reaction.

5. Crosslinkable compositions according to one or more of Claims 1 to 4, **characterized in that** they can be prepared using
(A) organosilicon compound having at least two condensable groups,
(B) compound of the formula (III) and/or reaction products thereof with hydrolyzable organosilicon compounds and, if appropriate,
(C) crosslinking agent.

6. Crosslinkable compositions according to Claim 5, **characterized in that** they comprise amounts of from 0.01 to 5 parts by weight of component (B), based on 100 parts by weight of organosilicon compound (A).

7. Crosslinkable compositions according to one or more of Claims 1 to 6, **characterized in that** they are composed of
(A) organosilicon compounds containing units of the formula (I),
(B) compound of the formula (III) and/or reaction products thereof with hydrolyzable organosilicon compounds,
if appropriate
(C) crosslinking agent of the formula (IV),
if appropriate
(D) curing accelerator,
if appropriate
(E) plasticizer,
if appropriate
(F) fillers,
if appropriate
(G) coupling agent, and
if appropriate
(H) additives.

8. Moldings, produced via crosslinking of the inventive compositions according to one or more of Claims 1 to 7.

## Revendications

1. Matières réticulables à base de composés organosiliciés, **caractérisées en ce qu'**elles contiennent au moins un composé de formule
H(OCH₂CH₂)ₙ(OCHCH₃CH₂)ₚ(OCH₂CH₂)ₘOH (III)
et/ou ses produits de réaction avec des composés organosiliciés hydrolysables,
n étant 0 ou un nombre entier valant de 1 à 30,
m étant 0 ou un nombre entier valant de 1 à 30 et
la somme de n + m étant supérieure à 5, et
p étant 1, 2 ou 3.

2. Matières réticulables selon la revendication 1, **caractérisées en ce que** p est égal à 1 ou 2.

3. Matières réticulables selon la revendication 1 ou 2, **caractérisées en ce que** p est égal à 1.

4. Matières réticulables selon une ou plusieurs des revendications 1 à 3, **caractérisées en ce qu'**il s'agit de matières réticulables par une réaction de condensation.

5. Matières réticulables selon une ou plusieurs des revendications 1 à 4, **caractérisées en ce qu'**elles peuvent être préparées par utilisation
(A) d'un composé organosilicié comportant au moins deux groupes condensables,
(B) d'un composé de formule (III) et/ou de ses produits de réaction avec des composés organosiliciés hydrolysables, et éventuellement
(C) d'agents de réticulation.

6. Matières réticulables selon la revendication 5, **caractérisées en ce qu'**elles contiennent le composant (B) en quantités de 0,01 à 5 parties en poids, par rapport à 100 parties en poids de composé organosilicié (A).

7. Matières réticulables selon une ou plusieurs des revendications 1 à 6, **caractérisées en ce qu'**elles sont constituées
(A) de composés organosiliciés contenant des motifs de formule (I),
(B) d'un composé de formule (III) et/ou de ses produits de réaction avec des composés organosiliciés hydrolysables,
éventuellement
(C) d'agents de réticulation de formule (IV), éventuellement
(D) d'accélérateurs de durcissement,
éventuellement
(E) de plastifiants,
éventuellement
(F) de charges,
éventuellement
(G) de promoteurs d'adhérence, et
éventuellement
(H) d'additifs.

8. Corps moulés, produits par réticulation des matières selon l'invention, selon une ou plusieurs des revendications 1 à 7.
